# EUROPÄISCHE PATENTSCHRIFT

(11) **EP 0 487 539 B1**
(45) Veröffentlichungstag und Bekanntmachung des Hinweises auf die Patenterteilung: **14.04.1993**
(21) Anmeldenummer: 90910579.3
(22) Anmeldetag: 12.07.1990
(51) Int. Cl.: B23P 15/40

(54) **SCHNEIDWALZE ODER STANZZYLINDER UND VERFAHREN ZUM HERSTELLEN VON SOLCHEN**
CUTTING ROLLER OR PUNCHING CYLINDER AND PROCESS FOR MANUFACTURING
CYLINDRE DE COUPE OU CYLINDRE D'ESTAMPAGE ET PROCEDE POUR LEUR FABRICATION

(30) Priorität: 17.08.1989 DE 3927106
(43) Veröffentlichungstag der Anmeldung: 03.06.1992
(73) Patentinhaber: SCHOBER GMBH Werkzeug- und Maschinenbau, D-71735 Eberdingen (DE)
(72) Erfinder: Wittmaier, Klaus, W-7143 Vaihingen/Enz 7 (DE)
(74) Vertreter: Steimle, Josef, Dipl.-Ing.
(86) Internationale Anmeldenummer: DE9000531
(87) Internationale Veröffentlichungsnummer: WO9102622

(56) Entgegenhaltungen:
- DE-A- 2 907 325
- DE-C- 964 285
- FR-A- 2 086 600
- GB-A- 1 365 391
- US-A- 3 205 732
- US-A- 4 319 507

## Beschreibung

Die Erfindung betrifft gemäß dem Oberbegriff des Patentanspruchs 1 eine Schneidwalze, einen Stanzzylinder oder ein Stanzwerkzeug mit einem einteiligen oder mehrteiligen Walzenkörper in beliebiger Form und insbesondere einen sich wenigstens über einen Teil der Oberfläche des Walzenkörpers erstreckenden, erhabenen Schneidenfuß mit Schneide. Die Erfindung betrifft außerdem ein Verfahren zur Herstellung einer solchen Schneidwalze oder eines Stanzzylinders gemäß den Oberbegriffen der Patentansprüche 11 und 12.

Eine gattungsgemäße Schneidwalze sowie ein Verfahren nach dem Oberbegriff des Patentanspruchs 11 ist aus der DE-A-3 229 948 bekannt. Ein Verfahren zur Herstellung einer Schneidwalze nach dem Oberbegriff des Patentanspruchs 12 ist aus der FR-A-2086600 bekannt.

Es ist bekannt, daß Schneidwalzen oder Stanzzylinder, die zum Rotationsschneiden von Etiketten, Papier-, Kunststoffolien-, Kunstleder- oder dergleichen Bahnen zur Herstellung von Kaffeefiltern, Windeln, Damenbinden, Slip-Einlagen oder dergleichen dienen, einen Walzenkörper aufweisen, die an ihrem Umfang beliebige Schneidformen oder über wenigstens einen Teil ihres Umfangs sich erstreckende Schneiden mit Schneidenfuß aufweisen, die aus dem Vollen herausgearbeitet sind, d.h., daß vom Umfang des Walzenrohlings chemisch oder maschinell Material abgetragen wird, so daß nur noch der gekrümmte Schneidenfuß mit Schneide auf dem Walzenkörper stehenbleibt. Es muß daher ein der Höhe der Schneide entsprechender Teil des Walzenmaterials vom Umfang des Walzenrohlings abgearbeitet werden. Bei diesen Schneidwalzen oder Stanzzylindern ist daher die Schneide einstückig mit dem Walzenkörper oder Walzenkörpersegment verbunden. Diese Walzen weisen den Nachteil auf, daß deren Material keine zu große Festigkeit aufweisen darf, da sonst der Materialabtrag zur Herstellung der Schneide ungebührend erschwert werden würde, und dadurch die Herstellung nicht mehr rationell und kostengünstig durchgeführt werden kann. In der Regel bestehen derartige Schneidwalzen oder Stanzzylinder aus einem Chrom- oder Schnellarbeitsstahl in gehärteter Ausführung. Andrerseits weisen derartige Schneidwalzen oder Stanzzylinder aufgrund ihrer geringen Festigkeit eine begrenzte Standzeit auf, da sich die Schneiden relativ schnell abnutzen und sich somit Schneidfehler bzw. unsaubere Schnitte häufen.

Es wurde versucht, die Standzeit der Schneidwalzen dadurch zu verlängern, daß die Schneidwalze oder der Stanzzylinder bzw. Walzensegmente, die die Schneide tragen, aus Hartmetall hergestellt werden. Diese Segmente weisen jedoch den Nachteil auf, daß sie außerordentlich schwierig zu bearbeiten und daher nicht rationell und kostengünstig zu fertigen sind.

Mit der DE-A-3 229 948 und FR-A-2 086 600 ist eine Schneidwalze bekannt, die austauschbare Schneiden aufweist. Bei der FR-A-2 086 600 wird die austauschbare Schneide über spezielle Halteelemente derart in einer Nut der Schneidwalze gehalten, daß die Schneide den Walzenumfang geringfügig überragt. Zwar können derartige Schneidwalzen innerhalb relativ kurzer Zeit mit einem neuen Satz Schneiden versehen werden, jedoch bleiben die Standzeiten dieser Schneidwalzen unverändert kurz, so daß diese Schneidwalzen ebenso oft wie andere, mit einstückigen Schneiden ausgebildete Walzen aus ihren Walzenstühlen zur Überholung ausgebaut werden müssen.

Mit der US-A-3 205 732 ist eine Schneidvorrichtung bekannt, bei der ein Schneidelement in Form eines zugeschliffenen Bandstahlstreifens in eine an der Oberfläche einer Schneidwalze vorgesehenen Nut eingesetzt wird. Auch hier sind keine lange Standzeiten gewährleistet. Der Erfindung liegt daher die Aufgabe zugrunde, eine Schneidwalze oder einen Stanzzylinder oder ein Stanzwerkzeug der eingangs genannten Art bereitzustellen, die eine höhere Standzeit aufweist. Eine weitere Aufgabe der Erfindung ist es, auch ein Verfahren zur Herstellung solcher Schneidwalzen oder Stanzwerkzeuge bereitzustellen.

Diese Aufgaben werden erfindungsgemäß dadurch gelöst, daß der Schneidenfuß ein Schneidenträger ist, entlang dessen Verlauf eine Nut eingearbeitet wird, in die unter Wärmezufuhr ein Hartmetalldraht in geeignetem Querschnitt eingeformt und festgelegt wird, und daß schließlich an den die Nut überragenden Teil des Hartmetalldrahts die Schneide in Form von einer Schneidfläche und Schneidflanken angeformt werden.

Bei einer anderen Ausführungsform wird in die Oberfläche des Walzenkörpers bzw. Walzenkörpersegmentes eine Nut eingearbeitet, in die unter Wärmezufuhr ein Hartmetalldraht eingeformt und festgelegt wird, wobei schließlich an den die Nut überragenden Teil des Hartmetalldrahts die Schneidfläche und Schneidflanken angeformt werden. Der Schneidenträger wird bei dieser Ausführrungsform vom Walzenkörper oder Walzenkörpersegment gebildet.

Eine derart ausgebildete Schneidwalze, ein Stanzzylinder oder Stanzwerkzeug hat den wesentlichen Vorteil, daß sie einfach dadurch herzustellen sind, daß der Schneidenträger durch Materialabtragung von der Oberfläche des Walzenrohlings hergestellt wird, wobei dieser Vorgang bei der Verwendung eines relativ weichen Materials für den Walzenrohling einfach vonstatten geht und daher kostengüngstig und rationell durchführbar ist. In den durch Abtragung von Material hergestellten Schneidenträger wird sodann eine Nut z.B. eingefräst und bildet den Sitz für einen Hartmetalldraht, der unter Wärmezufuhr in diese Nut eingelegt wird. Dabei wird der Hartmetalldraht bis knapp unterhalb seiner Sintertemperatur erwärmt, wodurch er plastisch und verformbar wird. Ist der Hartmetalldraht an den Verlauf der Nut angepaßt und in diese hineingelegt worden, so wird er in der Nut festgelegt. Schließlich wird die Walze mit eingelegtem Hartmetalldraht rundgeschliffen und der Hartmetalldraht mit Schneidflanken versehen, wodurch die Schneide erzeugt wird.

Bei dem anderen Ausführungsbeispiel, bei dem die Nut direkt in die Oberfläche des Walzenkörpers oder Walzenkörpersegmentes eingefräst wird, wird entsprechend den vorigen Ausführungen unter Wärmezufuhr der Hartmetalldraht plastifiziert, so daß er verformt und entsprechend dem Verlauf der Nut in diese eingelegt werden kann. Nach dem Festlegen des verformten und eingelegten Hartmetalldrahts wird die Schneidwalze bzw. der Stanzzylinder rundgeschliffen und werden die Schneidflanken am Hartmetalldraht angeformt, so daß dieser eine Schneide oder Wate bildet.

Derart hergestellte Schneidwalzen oder Stanzzylinder weisen den außerordentlichen Vorteil auf, daß sie eine zehn- bis zwanzigfache Standzeit gegenüber herkömmlichen Schneidwalzen bzw-. Stanzzylindern aufweisen, da die Hartmetallschneiden nur einer außerordentlich geringen Abnutzung unterliegen. Die Bearbeitung des Hartmetalldrahts zur Herstellung der Schneide kann wirtschaftlich mittels eines geeigneten Werkzeugs, z.B. eines Diamantwerkzeugs durchgeführt werden, da nur sehr wenig Material vom Hartmetalldraht abgetragen wird.

Gemäß einer bevorzugten Ausführungsform ist vorgesehen, daß die Schneide auf bekannte Weise durch Konturfräsen hergestellt wird. Dabei wird vom Walzenrohling soviel Material abgetragen, bis schließlich nur noch der Schneidenträger stehenbleibt, der nunmehr von der Oberfläche des Walzenkörpers oder Walzenkörpersegments absteht.

Vorteilhaft wird die Kontur der Nut in den Schneidenträger bzw. in den Walzenkörper eingefräst. Dabei verläuft die Kontur der Nut entsprechend dem Verlauf der späteren Schneide.

Gemäß einer bevorzugten Ausführung wird die Nut in den Walzenkörper bzw. in den Schneidenträger radial von außen mit einem dreieck-, rechteck- oder kreissegmentförmigen Querschnitt eingeformt. Dadurch, daß die Nut radial von außen z.B. eingefräst wird, liegt auch der Hartmetalldraht radial zur Achse der Schneidwalze in der Nut und wird deshalb bei Belastung in Richtung des Nutgrundes gedrückt. Dies hat den Vorteil, daß es zum Festlegen des Hartmetalldrahtes in der Nut keiner speziellen Vorkehrungen bedarf und somit der Hartmetalldraht im wesentlichen nur entgegen der Zentrifugalkraft in der Nut festgehalten werden muß. Mit unterschiedlichen Querschnittsformen kann die Nut an die beim Schneiden auftretenden Belastungsformen angepaßt werden, so daß der Hartmetalldraht z.B. bei einer kreissegmentförmigen Nut über einen Teil seines Umfangs vollflächig von der Nut getragen wird, bei einer dreieckförmigen Nut an zwei Punkten bzw. zwei Linien in der Nut anliegt und sich bei einer Nut mit rechteckförmigen Querschnitt entweder ausschließlich am Nutgrund oder zusätlich noch an den Nutseitenwänden abstützt.

Gemäß einer vorteilhaften Ausführungsform werden der Walzenkörper oder das Walzenkörpersegment und gegebenenfalls der Schneidenträger vor dem Einlegen des Hartmetalldrahts auf eine Temperatur unterhalb der Sintertemperatur des Hartmetalldrahtes erhitzt. Dies hat den Vorteil, daß beim Einlegen und Einfügen des Hartmetalldrahts keine örtlichen Temperaturbelastungen entstehen, wodurch die Schneidwalze bzw. der Stanzzylinder aufgrund von stark unterschiedlichen Wärmespannungen eventuell Schaden nehmen könnten. Diese Erhitzung der Schneidwalze bzw. des Stanzzylinders kann z.B. in einem Glühofen erfolgen.

Bevorzugt wird die Schneidwalze oder das Walzenkörpersegment nach dem Einlegen des Hartmetalldrahtes langsam abgekühlt. Dies hat den Vorteil, daß einerseits der Hartmetalldraht und die Schneidwalze gleiche Temperaturen aufweisen, wodurch durch Temperaturunterschiede bedingte Spannunge vermieden werden. Andererseits werden durch das langsame Abkühlen graduelle Temperaturfelder mit unterschiedlichen Temperaturen und hieraus resultierende Spannungsgradienten innerhalb des Walzenkörpers vermieden.

Sobald die Schneidwalze bzw. der Stanzzylinder und der Hartmetalldraht eine entsprechende Temperatur aufweisen, wird der Hartmetalldraht in die Nut hart eingelötet. Hierfür wird z. B. handelsübliches Silberlot mit zusätzlichem Flußmittel verwendet. Nach dem Einlöten wird die Schneidwalze mit dem mit ihr verbundenen Hartmetalldraht langsam auf Raumtemperatur abgekühlt, so daß weiterhin durch Temperaturunterschiede bedingte Spannungsaradienten in der Verbindungsstelle von Nut und Hartmetalldraht vermieden werden.

Soll beispielsweise ein vorgeformter Hartmetalldraht in eine Nut eingelötet werden, so wird vorteilhaft die Schneidwalze mit eingelegtem Hartmetalldraht vor dem Einlöten des Drahtes erhitzt, so daß sowohl die Schneidwalze bzw. das Walzenkörpersegment als auch der Hartmetalldraht die zum Hartlöten erforderliche Temperatur aufweisen. Nach dem Einlöten wird die Schneidwalze bzw. das Walzenkörpersegment wiederum langsam auf Raumtemperatur abgekühlt.

Vorteilhaft wird die Schneidwalze oder das Walzenkörpersegment mittels einer Hilfsvorrichtung mit dem eingelöteten Hartmetalldraht rundgeschliffen, wodurch Unebenheiten des Metalldrahtes, Lötmittel bzw. Lötwerkstoff, Flußmittel oder dergleichen abgetragen werden. Außerdem wird die Schneidwalze bereits auf ihren endgültigen Schneiddurchmesser gebracht.

Schließlich werden die Schneidflanken nach dem Rundschleifen z.B. mittels eines Diamantschleifers hergestellt, wobei die Flanken bereits auf den gewünschten Schneidwinkel eingestellt werden. Dabei wird beidseits der späteren Schneidfläche der Schneide der Hartmetalldraht angeschliffen, wodurch der die Nut überragende Teil im wesentlichen V-förmig ausgebildet wird. Vorteilhaft wird dabei eine Schneidfläche erzeugt, die eine Breite von 0,02 bis 0,25 mm aufweist. Die Breite der Schneidfläche hängt im wesentlichen von den Anforderungen des späteren Einsatzes der Schneidwalze ab.

Bei einer abgenutzten Schneidwalze kann die Nut vorteilhaft dadurch hergestellt werden, daß abgenutzte Hartmetalldrähte entfernt, insbesondere ausgelötet werden. Somit sind diese Schneidwalzen mehrfach verwendbar, wobei nach dem Auslöten die Schneidwalzen lediglich gereinigt, z.B. sand- oder kugelgestrahlt werden müssen. Nach diesem Vorgang kann ein neuer Hartmetalldraht in die bereits vorhandene Nut eingesetzt und dort wieder festgelötet werden. Schließlich muß eine derart hergestellte Schneidwalze noch rundgeschliffen und die Flanken der Schneide noch hergestellt werden.

Derart hergestellte Schneidwalzen oder Stanzzylinder weisen den Vorteil auf, daß sie eine gegenüber herkömmlichen Schneidwalzen zehn- bis zwanzigfache Standzeit besitzen, und daß bei einer abgenutzten Schneidwalze bzw. Stanzzylinder lediglich der abgenutzte Hartmetalldraht ausgelötet und gegen einen neuen ausgetauscht werden muß. Oftmals genügt es auch, die Schneidwalze bzw. den Stanzzylinder zu überschleifen und die Schneidflanken nachzuarbeiten.

Die der Erfindung zugrunde liegende Aufgabe wird auch durch eine Schneidwalze bzw. einen Stanzzylinder gelöst, deren bzw. dessen Schneidenfuß einen Schneidenträger bildet und die bzw. der eine sich wenigstens über einen Teil des Umfangs des Walzenkörpers oder des Walzenkörpersegmentes bzw. über einen Teil des Schneidenträgers erstreckende Nut mit einem eingeformten Hartmetalldraht aufweist, wobei der Hartmetalldraht in der Nut festgelegt ist und eine Schneide bildende Schneidfläche mit Schneidflanken aufweist.

Wie bereits weiter oben erläutert, wird die Schneide von einem Hartmetalldraht gebildet, der in eine Nut eingelest und dort festgelegt ist, die enteweder in der dem Walzenkörper überragenden Schneidenträger der Schneidwalze oder direkt im Walzenkörper oder im Walzenkörpersegment vorgesehen ist. Im ersteren Falle können aufgrund der den Walzenkörper überragenden Schneide Gegenstände größerer Dicke geschnitten werden, wohingegen im zweiten Falle, bei dem der Hartmetalldraht in einer Nut vorgesehen ist, die direkt in den Walzenkörper oder das Walzenkörpersegment eingeformt ist, bevorzugt blattartige Gegenstände geschnitten werden.

Vorteilhaft ist die Nut radial in der Schneidenträger bzw. in den Walzenkörper bzw. ein Walzenkörpersegment eingeformt. Wie ebenfalls bereits erwähnt, wird dadurch der Vorteil erzielt, daß sich dadurch der in der Nut festgelegte Hartmetalldraht gleichmäßig in der Nut abstützen kann.

Eine einfache Bearbeitung des Walzenrohlings wird dadurch erreicht, daß dieser und somit der Walzenkörper bzw. das Walzenkörpersegment, und gegebenenfalls der Schneidenträger aus Werkzeugstahl bzw. normalem Stahl bestehen. Da sich Werkzeugstahl bzw. normaler Stahl sehr gut bearbeiten läßt, ist eine rationelle und somit kostengünstige Fertigung der Schneidwalze mit Nut möglich. Außerdem weisen aus Werkzeugstahl bzw. aus normalem Stahl hergestellte Walzen eine gegenüber herkömmlichen Schneidwalzen größere Elastizität auf, und bieten dadurch eine gute elastische Abstützung der Schneide, die demzufolge geringeren Belastungen ausgesetzt ist. Falls erforderlich kann der Walzenkörper oder das Walzenkörpersegment bzw. der Schneidenträger aus einem luftgehärteten Metall bestehen.

Gemäß einer bevorzugten Ausführungsform besteht der Hartmetalldraht aus gesintertem Hartmetall und kann einen kreisrunden Querschnitt oder eine beliebige Form aufweisen. Sintermaterialien besitzen, wie allgemein bekannt, eine sehr große Härte und sind außerdem nahezu verschleißfrei. Kreisrunde Querschnitte des Hartmetalldrahtes werden deshalb bevorzugt, da ein derart ausgebildeter Draht nach allen radialen Richtungen das gleiche Widerstandsmoment aufweist und somit beim Einlegen des Hartmetalldrahtes in die Nut gleiche Kräfte auftreten bzw. gleiche Rückstellkräfte herrschen, so daß stark gekrümmte oder sich über den ganzen Umfang erstreckende Schneiden gleichermaßen gut, wie sich in gerader Richtung erstreckende Schneiden hergestellt werden können.

Bevorzugt sind der Walzenkörper oder das Walzenkörpersegment und der Schneidenträger einstückig ausgebildet. Dies hat den Vorteil, daß die erfindungsgemäße Schneidwalze wie herkömmliche Schneidwalzen herstellbar ist, wobei lediglich in den Schneidenträger die Nut zur Aufnahme des Hartmetalls zusätzlich eingearbeitet werden muß. Es können somit bereits vorhandene Werkzeuge weiterverwendet werden. Notwendigerweise, wenn der Schneidenträger nur einen geringen Teil der Schneidwalzen- bzw. Stanzzylinderoberfläche bedeckt, kann der Schneidenträger auf ein Teilsegment (Walzenkörpersegment) aufgebracht sein und dieses dann durch Verschraubung mit dem Walzengrundkörper verbunden werden, so daß die Schneidwalze mehrstückig ausgebildet ist.

Gemäß einer anderen Ausführungsform ist vorgesehen, daß der in die Nut einzusetzende Hartmetalldraht vorgeformt ist und den Verlauf der Nut aufweist. Die Verformung entsteht in einer einfach ausgebildeten Hilfsvorrichtung, die der Schneidwalze in ihrer Art ähnlich ist und die gleiche, der Schneidenkontur entsprechende Nut aufweist. Dies hat den Vorteil, daß Schneidwalzen und ihre zugehörigen Hartmetalldrähte, die später die Schneide bilden, unabhängig voneinander und somit an verschiedenen Orten und zu verschiedenen Zeiten hergestellt werden können und gegebenenfalls auch als Reparatursatz Verwendung finden können. Demnach können Schneidwalzen mit abgenutzter oder gebrochener Schneide dadurch wieder einsatzbereit gemacht werden, daß der Hartmetalldraht ausgelötet, ein neuer vorgeformter Hartmetalldraht eingesetzt und eingelötet wird und schließlich die Schneide auf Maß geschliffen wird. Vorteilhaft können Walzenkörpersegmente auch direkt beim Kunden in den Walzengrundkörper eingesetzt werden, so daß Zeiten für Ein- und Ausbau gesenkt bzw. Kosten für den zeitraubenden Walzentransport entfallen können und somit die Stillstandzeit der Schneidmaschine wesentlich abgekürzt wird.

Weitere vorteile, Merkmale und Einzelheiten der Erfindung ergeben sich aus der nachfolgenden Beschreibung, in der unter Bezugnahme auf die Zeichnung, ein bevorzugtes Ausführungsbeispiel im einzelnen beschrieben ist. Dabei zeigen:
- Fig.1: eine perspektivische Teilansicht auf eine Stirnseite einer Schneidwalze bzw. eines Stanzzylinders, einen Teil des Schneidenträgers und der Schneide zeigend; und
- Fig.2-4: einen Querschnitt durch einen schematisch dargestellten Schneidenträger und Schneide, sukzessive den Herstellungsvorgang der Schneide zeigend.

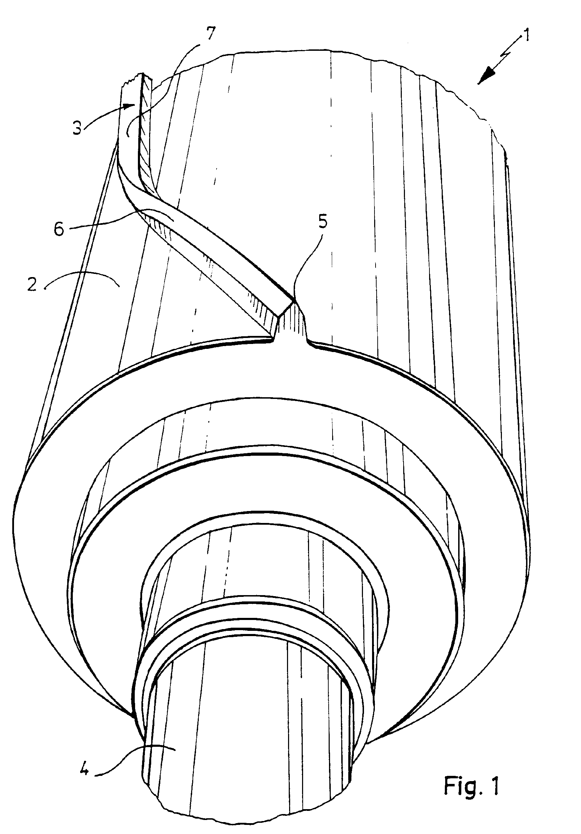

Die Fig.1 zeigt eine insgesamt mit 1 bezeichnete Schneidwalze mit einem Walzenkörper 2 und einen radial vom Walzenkörper 2 abstehenden und diesen überragenden Schneidenträger 3. Axial setzt sich der Walzenkörper 2 in einer Welle 4 fort, die sowohl zum Antrieb der Schneidwalze 1 als auch zu deren Lagerung dient. Der Schneidenträger 3 weist eine Schneide 5 und zwei die Schneide 5 bildende Schneidflanken 6 und 7 auf. Die in der Fig.1 wiedergegebene Schneidwalze 1 ist zwar ohne Tragringe ausgebildet, wobei sich die Erfindung jedoch nicht nur auf solche ohne Tragringe, sondern auch auf Schneidwalzen 1 mit Tragringen beziehen soll. Die Tragringe haben die Aufgabe, den Hartmetalldraht bei besonderer Belastung vor Stößen und zu starken Druchbeanspruchungen zu schützen und den jeweils notwendigen Abstand der Schneide zum Gegenschneideteil zu gewährleisten. Das Gegenschneideteil kann ein vollflächig glatt ausgebildeter Körper sein. Das Gegenschneideteil kann auch eine spiegelbildlich zur Schneidwalze 1 gefertigte weitere Schneidwalze sein. Außerdem sind der Walzenkörper 2 und der Schneidenträger 3 einstückig oder mehrstückig hergestellt, wobei sich die Erfindung auch auf zwei- oder mehrteilige Walzenkörper 2 und Schneidenträger 3, insbesondere auf Walzenkörpersegmente (nicht dargestellt), die in den Walzenkörper 2 eingesetzt werden, beziehen soll.

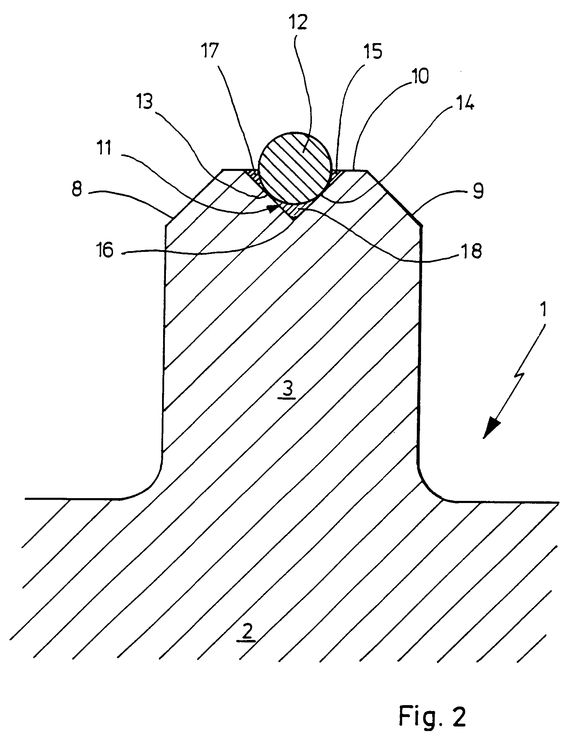

Anhand der Figuren 2 bis 4 wird nachfolgend das Herstellungsverfahren einer erfindungsgemäßen Schneidwalze 1 beschrieben. Von einem aus einem Wertzeugstahl oder normalem Stahl bestehenden Walzenrohling wird z.B. mittels eines Fräsers Material derart abgetragen, daß ein den Walzenkörper 2 radial überragender und sich wenigstens teilweise über dessen Umfang erstreckender Schneidenträger 3 stehenbleibt. Dieser Schneidenträger 3 ist somit einstückig mit dem Walzenkörper 2 oder dem Walzenkörpersegment verbunden. Die Höhe des Schneidenträgers 3 ist abhängig von der späteren Verwendung der Schneidwalze 1, d.h. von der Dicke des zu schneidenden Materials. Der Schneidenträger 3 kann an seinem freien Ende mit Fasen 8, 9 versehen werden, was einerseits die Verletzungsgefahr, andererseits die Beschädigungsgefahr des Schneidenträgers 3 vermindert. In das stirnseitige Ende 10 des Schneidenträgers 3 wird eine Nut 11 eingefräst, die bei dem in den Figuren 2 bis 4 dargestellten Ausführungsbeispiel einen dreieckförmigen Querschnitt aufweist. Die Nut 11 kann auch einen rechteckförmigen oder einen kreissegmentförmigen Querschnitt aufweisen. Ist die Schneidwalze 1 soweit fertiggestellt, daß der Schneidenträger 3 mit einer Nut 11 versehen ist, so wird die Schneidwalze 1 in einem Ofen langsam bis unterhalb der Sintertemperatur eines Hartmaterials, z. B. eines Hartmetalles erwärmt. Nach Erreichen dieser Temperatur wird ein Hartmetall in Form eines Hartmetalldrahts 12 unter weiterer Zufuhr von Wärme, z.B. mittels eines Schweißbrenners, plastifiziert und in die Nut eingelegt. Durch sukzessive Erwärmung und Einfügen des Hartmetalldrahtes 12 in die Nut 11 nimmt dieser den Verlauf der Nut 11 an. Durch die Erwärmung des Hartmetalldrahtes 12 bis in den Bereich seiner Sintertemperatur wird dieser verformbar und ist somit an den Verlauf der Nut anpaßbar. Nachdem in die Nut 11 der Hartmetalldraht 12 eingelegt ist, wird die Schneidwalze 1 im Ofen soweit temperiert, bis sie die erforderliche Temperatur aufweist. Sobald die Schneidwalze diese Temperatur erreicht hat, wird sie dem Ofen entnommen und der in der Nut 11 sich befindende Hartmetalldraht 12 unter Zuführung eines Flußmittels und eines Hartlotes, z.B. eines Silberlotes oder dergleichen, eingelötet. Bei der in den Figuren 2 bis 4 wiedergegebenen Ausführungsform liegt der Hartmetalldraht 12 an zwei Punkten 13 und 14 an der Nutwand an, wohingegen die Hohlräume 15, 16 und 17 mit Silberlot 18 ausgefüllt sind. Dabei um- und unterfließt das Silberlot 18 aufgrund der Kapillarwirkung den Hartmetalldraht 12 und verbindet diesen stoffschlüssig mit der Wandung der Nut 11 des Schneidenträgers 3.

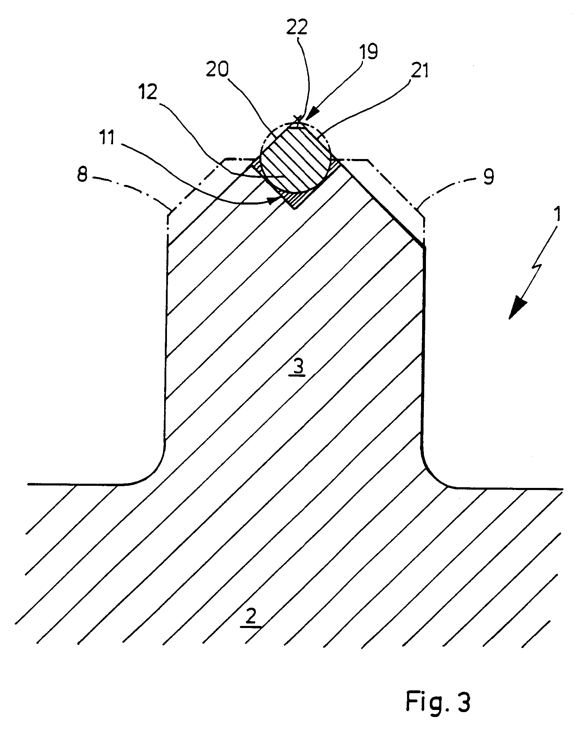

Nach dem Einlöten des Hartmetalldrahtes 12 wird die Schneidwalze 1 weiter abgekühlt, so daß es aufgrund unterschiedlicher Wärmeausdehnungen und hieraus resultierenden Spannungsgradienten nicht zu Rissen im Hartmetalldraht 12 kommt. Hat die Schneidwalze 1 Raumtemperatur erreicht, so wird sie in eine Schleifvorrichtung eingespannt und rundgeschliffen. Wie in der Fig.3 dargestellt, wird dabei das stirnseitige, der Nut 11 gegenüberliegende Ende 19 des Hartmetalldrahtes 12 angeschliffen. Die Schneidwalze 1 weist nunmehr einen einheitlichen Durchmesser über die gesamte Drahtoberfläche auf. Als Werkzeug wird bevorzugt ein Diamantschleifer verwendet. Nach dem Rundschleifen der Schneidwalze 1 werden die Schneidflanken 20 und 21 dadurch hergestellt, daß der Hartmetalldraht 12 beidseits angeschliffen wird. Bei diesem Schleifvorgang erhalten die Schneidflanken 20 und 21 bereits ihren endgültigen Schneidwinkel, teilweise wird aber auch nur an dem Hartmetalldraht 12 der Schneidwinkel angeschliffen, wobei die Fasen 8 und 9 des Schneidenträgers unbearbeitet bleiben. Außerdem richtet sich die Schleiftiefe nach der Breite der stirnseitigen Schneidfläche 22, die eine Breite von 0,02 bis 0,25 mm aufweisen kann. Beim Schleifen der Schneidflanken 20 und 21 wird außerdem der Schneidenträger 3 im Bereich ihrer Fasen 8 und 9 derart angeschliffen, daß er mit den Schneidflanken 20 und 21 fluchtet, falls dies für die geforderte Schneidenform notwendig wird.

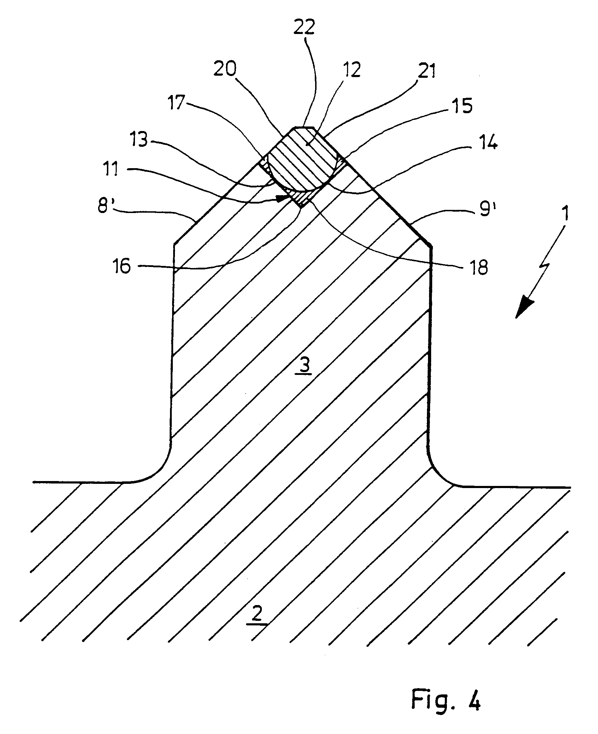

Nach der Fertigstellung der Schneide 5 weist der Schneidenträger 3 eine Gestalt auf, wie sie in der Fig.4 wiedergegeben ist. falls die Fasen mitbearbeitet worden sind, geht der Schneidenträger 3 mit seinen neuen Fasen 8′ und 9′ fluchtend in die Schneidflanken 20 und 21 des Hartmetalldrahtes 12 über, der seinerseits stirnseitig die Schneidfläche 22 aufweist.

Bei einem Schneidvorgang wird die Schneidfläche 22 belastet. Dabei stützt sich der Hartmetalldraht 12 über die Punkte 13 und 14 an der Wandung der Nut 11 ab, wobei er an diesen Punkten 13 und 14 direkt an der Wandung der Nut 11 anliegt. Die Hohlräume 15, 16 und 17 sind mit Silberlot 18 ausgefüllt und bilden eine elastische Stütze für den Hartmetalldraht 12. Wie aus der Fig.4 ebenfalls ersichtlich, liegt der Hartmetalldraht 12 derart in der Nut 11, daß er über einen großen Teil seines Umfangs stoffschlüssig mit dem Schneidenträger 3 verbunden ist. Bei radialer Belastung, d.h. in radialer Richtung der Schneidwalze 1 stützt sich der Hartmetalldraht 12 ausschließlich in der Nut 11 ab. Auch bei einer von der radialen Richtung abweichenden Richtung ist ein sicherer Halt gewährleistet, da der Hartmetalldraht 12 nach wie vor auf Druck belastet wird. Die Hauptaufgabe der Verlötung besteht darin, den Hartmetalldraht 12 sicher in der Nut 11 zu halten, insbesondere entgegen der während der Rotation der Schneidwalze 1 auftretenden Zentrifugalkraft. Die Erfindung bezieht sich jedoch nicht nur auf Schneidwalzen bzw. Stanzzylinder mit eingelöteten Hartmetalldrähten 12, sondern auch auf solche, falls notwendig, mit Hilfe von hochfesten Klebemitteln befestigte Hartmetalldrähte 12. Eine Verspannung, Verklemmung oder mechanische Befestigung des Hartmetalldrahtes 12 in der Nut 11 ist ebenfalls möglich.

Eine Überholung einer Schneidwalze 1 mit einem Hartmetalldraht 12 mit abgenutzter Schneide 5 erfolgt dadurch, daß die Schneidwalze 1 am Durchmesser der Schneidfläche 22 der Schneidwalze 1 überschliffen wird und die Schneidflanken 20 und 21 nachgeschliffen werden, bis die Schneidfläche 22 wieder den neuwertigen Zustand aufweist. Eine andere Möglichkeit besteht darin, daß sie in einem Ofen bis zur Schmelztemperatur des Hartlotes 18 erwärmt wird, so daß der abgenutzte Hartmetalldraht 12 aus der Nut 11 entfernt werden kann. Nach dem Entfernen des Hartmetalldrahtes 12 wird die Nut 11, z.B. mittels eines Kugeloder Sandstrahlgebläses, gesäubert. Die Schneidwalze 1 ist nun bereit zur Aufnahme eines neuen Hartmetalldrahtes 12, der entlang weder bereits vorgeformt in die Nut 11 eingesetzt wird, oder, wie oben beschrieben, unter Wärmezufuhr dem Verlauf der Nut 11 angepaßt wird. Nach dem Einlöten, Rundschleifen und Schleifen der Schneidflanken 20 und 21 des neuen Hartmetalldrahtes 12 ist die Schneidwalze 1 wieder einsatzbereit, ohne daß am Walzenkörper 2 und/oder an dem Schneidenträger 3 Änderungen hätten vorgenommen werden müssen.

Die Erfindung beschränkt sich jedoch nicht darauf, daß ein Hartmetalldraht 12 in eine in einer Schneide 3 vorgesehene Nut 11 eingesetzt wird. Die Nut 11 kann auch direkt am Umfang des Walzenkörpers 2 vorgesehen sein, so daß der Hartmetalldraht 12 direkt mit dem Walzenkörper 2 oder Walzenkörpersegment verbunden wird und diesen mit seinen Schneidflanken und seiner Schneidfläche nur geringfügig überragt.

## Patentansprüche

1. Schneidwalze oder Stanzzylinder mit einem Walzenkörper (2) oder Walzenkörpersegmenten und insbesondere einem sich wenigstens über einen Teil der Oberfläche des Walzenkörpers (2) erstreckenden, erhabenen Schneidenfuß mit Schneide (3), gekennzeichnet durch eine sich wenigstens über einen Teil des Umfanges des Walzenkörpers (2) bzw. über einen Teil des als Schneidenträger (3) ausgebildeten Schneidenfusses erstreckende Nut (11) mit einem eingeformten Hartmetalldraht (12), wobei der Hartmetalldraht (12) in der Nut (11) festgelegt ist und eine Schneidfläche (22) bildende Schneidflanken (20 und 21) aufweist.

2. Schneidwalze oder Stanzzylinder nach Anspruch 1, dadurch gekennzeichnet, daß die Nut (11) radial in den Schneidenträger (3) eingeformt ist.

3. Schneidwalze oder Stanzzylinder nach Anspruch 1, dadurch gekennzeichnet, daß die Nut (11) in den Walzenkörper (2) oder in ein Walzenkörpersegment eingeformt ist.

4. Schneidwalze oder Stanzzylinder nach einem der Ansprüche 1 bis 3, dadurch gekennzeichnet, daß der Walzenkörper (2) und gegebenenfalls der Schneidenträger (3) aus Werkzeugstahl oder normalem Stahl bestehen.

5. Schneidwalze oder Stanzzylinder nach einem der Ansprüche 1 bis 4, dadurch gekennzeichnet, daß der Hartmetalldraht (12) aus gesintertem Hartmetall besteht.

6. Schneidwalze oder Stanzzylinder nach einem der Ansprüche 1 bis 5, dadurch gekennzeichnet, daß die Nut (11) dreieck-, rechteck- oder kreissegmentförmig ausgebildet ist.

7. Schneidwalze oder Stanzzylinder nach einem der Ansprüche 1 bis 6, dadurch gekennzeichnet, daß der Hartmetalldraht (12) einen kreisrunden oder anderen Querschnitt aufweist.

8. Schneidwalze oder Stanzzylinder nach einem der Ansprüche 1 bis 7, dadurch gekennzeichnet, daß der Walzenkörper (2) und der Schneidenträger (3) einstückig oder mehrstückig ausgebildet sind.

9. Schneidwalze oder Stanzzylinder nach einem der Ansprüche 1 bis 8, dadurch gekennzeichnet, daß der in die Nut (11) einzusetzende Hartmetalldraht (12) vorgeformt ist und den Verlauf der Nut (11) aufweist.

10. Schneidwalze oder Stanzzylinder nach einem der Ansprüche 1 bis 9, dadurch gekennzeichnet, daß sie aus einer Trägerwelle mit angeschraubten oder in anderer Form befestigten Segmenten besteht, die mit Hartmetallschneiden versehen sind.

11. Verfahren zur Herstellung einer Schneidwalze (1), eines Stanzzylinders oder eines Stanzwerkzeuges mit einem Walzenkörper (2) oder Walzenkörpersegmenten für beliebige Schneidformen und einem sich wenigstens über einen Teil der Oberfläche des Walzenkörpers (2) oder Walzenkörpersegmentes erstreckenden, erhabenen Schneidenfuß, bei welchem der Walzenkörper (2) bzw. das Walzenkörpersegment mit dem erhabenen Schneidenfuß als Schneidenträger vorzugsweise einstückig ausgebildet ist, dadurch gekennzeichnet, daß entlang des Verlaufes des Schneidenfußes eine Nut (11) eingearbeitet wird, in die unter Wärmezufuhr ein Hartmetalldraht (12) eingeformt und festgelegt wird und daß schließlich an den die Nut (11) überragenden Teil des Hartmetalldrahtes (12) die Schneide (3) in Form von einer Schneidfläche (5; 22) und Schneidflanken (6, 7; 20, 21) angeformt werden.

12. Verfahren zur Herstellung einer Schneidwalze (1) mit einem Walzenkörper (2) oder Walzenkörpersegmenten bei welchem in die Oberfläche des Walzenkörpers (2) oder Walzenkörpersegmentes eine Nut (11) als Schneidenträger eingearbeitet wird, dadurch gekennzeichnet, daß in die Nut (11) unter Wärmezufuhr ein Hartmetalldraht (12) eingeformt und festgelegt wird, und daß schließlich an den die Nut (11) überragenden Teil des Hartmetalldrahtes (12) Schneidflanken (6, 7; 20, 21) oder Waten oder Doppelwaten angeformt werden.

13. Verfahren nach Anspruch 11 oder 12, dadurch gekennzeichnet, daß der Schneidenträger auf bekannte Weise durch Konturfräsen hergestellt wird.

14. Verfahren nach einem der Ansprüche 11 bis 13 dadurch gekennzeichnet, daß die Kontur der Nut (11) in den Schneidenträger bzw. in den Walzenkörper (2) oder in ein Walzenkörpersegment eingefräst wird.

15. Verfahren nach einem der Ansprüche 11 bis 14 dadurch gekennzeichnet, daß die Nut (11) radial von außen mit einem dreieck-, rechteck- oder kreissegmentförmigen Querschnitt in den Schneidenträger bzw. in den Walzenkörper (2) oder das Walzenkörpersegment eingeformt wird.

16. Verfahren nach einem der Ansprüche 11 bis 15 dadurch gekennzeichnet, daß der Walzenkörper (2) oder das Walzenkörpersegment und gegebenenfalls der Schneidenträger vor dem Einlegen des Hartmetalldrahtes (12) bis unterhalb der Sintertemperatur des Hartmetalldrahtes (12) erhitzt werden.

17. Verfahren nach einem der Ansprüche 11 bis 16 dadurch gekennzeichnet, daß die Schneidwalze (1) nach dem Einlegen des Hartmetalldrahtes (12) langsam abgekühlt wird.

18. Verfahren nach einem der Ansprüche 11 bis 17 dadurch gekennzeichnet, daß der Hartmetalldraht (12) in die Nut (11) hart eingelötet wird, oder mit einem anderen Haftvermittler oder Bindemittel oder über eine mechanische Befestigung sicher in dem Walzenkörper (2) oder in dem Walzenkörpersegment festgelegt wird.

19. Verfahren nach einem der Ansprüche 11 bis 18 dadurch gekennzeichnet, daß die Schneidwalze (1) mit eingelegtem Hartmetalldraht (12) zum Einlöten des Drahtes erhitzt wird.

20. Verfahren nach einem der Ansprüche 11 bis 19 dadurch gekennzeichnet, daß die Schneidwalze (1) mit eingelötetem Hartmetalldraht (12) langsam auf Raumtemperatur abgekühlt wird.

21. Verfahren nach einem der Ansprüche 11 bis 20 dadurch gekennzeichnet, daß die Schneidwalze (1) mit eingeformtem Hartmetalldraht (12) rundgeschliffen wird.

22. Verfahren nach Anspruch 21, dadurch gekennzeichnet, daß Schneidflanken (6, 7; 20, 21) nach dem Rundschleifen z.B. mittels eines Diamantschleifers oder durch Erodieren oder mittels anderer bekannter Verfahren hergestellt werden, wobei die Flanken (6, 7; 20, 21) bereits auf den erforderlichen Schneidwinkel eingestellt werden.

23. Verfahren nach einem der Ansprüche 11 bis 22 dadurch gekennzeichnet, daß eine Schneidfläche (5; 22) von 0,005 bis 0,5 mm, insbesondere von 0,02 bis 0,25 mm Breite hergestellt wird.

24. Verfahren nach einem der Ansprüche 11 bis 23 dadurch gekennzeichnet, daß die Nut (11) durch Entfernen abgenutzter Hartmetalldrähte (12) hergestellt wird.

## Claims

1. Cutting roller or punching cylinder with a roller body (2) or roller body segments and in particular a raised cutting foot with a cutter (3) extending along at least a part of the surface of the roller body (2), characterised by a groove (11) extending over at least part of the roller body circumference (2), or over at least part of the cutting foot, which is formed as a cutter support (3), the groove accommodating a hard metal wire (12), whereby the wire (12) is fixed in the groove (11) and is provided with cutter sides (20,21) which form a cutting surface (22).

2. Cutting roller or punching cylinder as claimed in Claim 1, characterised in that the groove (11) is formed radially in the cutter support (3).

3. Cutting roller or punching cylinder as claimed in Claim 1, characterised in that the groove (11) is formed in the roller body (2) or roller body segments.

4. Cutting roller or punching cylinder as claimed in one of Claims 1 to 3, characterised in that the roller body (2) and, if applicable, the cutter support (3) are of tool steel or normal steel.

5. Cutting roller or punching cylinder as claimed in one of Claims 1 to 4, characterised in that the hard metal wire (12) is of sintered hard metal.

6. Cutting roller or punching cylinder as claimed in Claims 1 to 5, characterised in that the groove (11) has a triangular, rectangular or part-circular form.

7. Cutting roller or punching cylinder as claimed in one of Claims 1 to 6, characterised in that the hard metal wire (12) has a circular or other cross-section.

8. Cutting roller or punching cylinder as claimed in one of Claims 1 to 7, characterised in that the roller body (2) and the cutter support (3) are formed in one piece or several pieces.

9. Cutting roller or punching cylinder as claimed in one of Claims 1 to 8, characterised in that the hard metal wire (12) to be inserted in the groove (11) is pre-formed and follows the course of the groove (11).

10. Cutting roller or punching cylinder as claimed in one of Claims 1 to 9, characterised in that it comprises a support shaft with segments screwed on or otherwise secured, which segments are provided with hard metal cutters.

11. Process for the manufacture of a cutting roller (1), a punching cylinder or a punching tool, with a roller body (2) or roller body segments for any cutting form, with a raised cutting foot extending over at least a part of the surface of the roller body (2) or roller body segment, whereby the roller body (2) or roller body segment with the raised cutting foot is preferably formed in one piece, characterised in that a groove (11) is formed along the length of the cutting foot, into which groove a hard metal wire (12) is inserted and fixed under heating, and in that finally the part of the hard metal wire (12) extending out of the groove (11) is formed into a cutter (3) in the form of a cutting surface (5;22) and cutter sides (6,7;20,21).

12. Process for the manufacture of a cutting roller (1) with a roller body (2) or roller body segments in which a groove (11) is formed in the surface of the roller body (2) or roller body segment, characterised in that a hard metal wire is inserted and fixed under heating in the groove (11), and in that finally cutter sides (6,7;20,21) or a bevel or a double bevel are formed on the part of the hard metal wire (12) extending from the groove (11).

13. Process as claimed in Claim 11 or 12, characterised in that the cutter support is manufactured in a known manner by contour milling.

14. Process as claimed in one of Claims 11 to 13, characterised in that the contour of the groove (11) is cut into the cutter support or the roller body (2) or the roller body segment.

15. Process as claimed in one of Claims 11 to 14, characterised in that the groove (11) is formed in the cutter support or in the roller body (2) radially from the outside with a triangular, rectangular or part-circular cross-section.

16. Process as claimed in one of Claims 11 to 15, characterised in that the roller body (2) or the roller body segment and, if applicable, the cutter support are heated, before insertion of the hard metal wire (12), to below the sinter temperature of the hard metal wire (12).

17. Process as claimed in one of Claims 11 to 16, characterised in that the cutting roller (1) is slowly cooled after the hard metal wire (12) is inserted.

18. Process as claimed in one of Claims 11 to 17, characterised in that the hard metal wire (12) is hard-soldered into the groove (11), or is fixed in the roller body (2) or the roller body segment by means of another adhesive agent or binder or by mechanical means.

19. Process as claimed in one of Claims 11 to 18, characterised in that the cutting roller (1) with the hard metal wire (12) inserted is heated for soldering of the wire.

20. Process as claimed in one of Claims 11 to 19, characterised in that the cutting roller (1), with the hard metal wire (12) soldered in, is slowly cooled to room temperature.

21. Process as claimed in one of Claims 11 to 20, characterised in that the cutting roller (1) with the hard metal wire (12) inserted is rounded by grinding.

22. Process as claimed in Claim 21, characterised in that cutter sides (6,7;20,21) are formed after the grinding by, for example, a diamond grinder or by erosion or by another known method, whereby the sides (6,7;20,21) are already set to the required cutting angle.

23. Process as claimed in one of Claims 11 to 22, characterised in that a cutting surface (5;22) of width 0.005 to 0.5mm, in particular 0.02 to 0.25mm, is formed.

24. Process as claimed in one of Claims 11 to 23, characterised in that the groove (11) is formed by removal of used hard metal wires (12).

## Revendications

1. Cylindre de découpage ou cylindre de poinçonnage avec un corps de cylindre (2) ou des segments de corps de cylindre et en particulier avec un pied de lame tranchante en relief avec un tranchant (3) s'étendant au moins sur une partie de la surface du corps de cylindre (2), caractérisé par une gorge (11) s'étendant au moins sur une partie de la périphérie du corps de cylindre (2) ou sur une partie du pied de lame tranchante constitué comme un support (3) de lame tranchante avec un fil de métal dur (12) mis en forme, ce fil de métal dur (12) étant fixé dans la gorge (11) et présentant des flancs de découpage (20 et 21) définissant une surface de découpage (22).

2. Cylindre de découpage ou cylindre de poinçonnage selon la revendication 1, caractérisé en ce que la gorge (11) est formée en sens radial dans le support (3) de lame tranchante.

3. Cylindre de découpage ou cylindre de poinçonnage selon la revendication 1, caractérisé en ce que la gorge (1) est réalisée dans le corps de cylindre (2) ou dans un segment du corps de cylindre.

4. Cylindre de découpage ou cylindre de poinçonnage selon une quelconque des revendications 1 à 3, caractérisé en ce que le corps de cylindre (2) et éventuellement le support (3) de lame tranchante sont en acier à outil ou en acier normal.

5. Cylindre de découpage ou cylindre de poinçonnage selon une quelconque des revendications 1 à 4 caractérisé en ce que le fil de métal dur (12) est en métal dur fritté.

6. Cylindre de découpage ou cylindre de poinçonnage selon une quelconque des revendications 1 à 5, caractérisé en ce que la gorge (11) est réalisée en forme de triangle, de rectangle ou de secteur de cercle.

7. Cylindre de découpage ou cylindre de poinçonnage selon une quelconque des revendications 1 à 6, caractérisé en ce que le fil de métal dur (12) a une section droite circulaire ou autre.

8. Cylindre de découpage ou cylindre de poinçonnage selon une quelconque des revendications 1 à 7, caractérisé en ce que le corps de cylindre (2) et le support (3) de lame tranchante sont en une pièce ou en plusieurs pièces.

9. Cylindre de découpage ou cylindre de poinçonnage selon une quelconque des revendications 1 à 8, caractérisé en ce que le fil de métal dur (12) s'introduisant dans la gorge (11) est préformé et présente la configuration de la gorge (11).

10. Cylindre de découpage ou cylindre de poinçonnage selon une quelconque des revendications 1 à 9, caractérisé en ce qu'il est constitué par un arbre porteur ayant des segments fixés par des vis ou de toute autre façon qui sont pourvus de lame tranchante en métal dur.

11. Procédé pour la fabrication d'un cylindre de découpage (1), d'un cylindre de poinçonnage ou d'un outil de poinçonnage avec un corps de cylindre (2) ou des segments de corps de cylindre pour des formes quelconques de découpage et avec un pied de lame tranchante s'étendant au moins sur une partie de la surface du corps de cylindre (2) ou du segment de corps de cylindre, dans lequel le corps de cylindre (2) ou le segment de corps du cylindre est de préférence réalisé en une pièce avec le pied de lame tranchante en relief comme support de lame tranchante, caractérisé en ce que, le long du contour du pied de lame tranchante est creusée une gorge (11) dans laquelle est mis en forme avec apport de chaleur et fixé un fil de métal dur (12) et, finalement, sur la partie du fil de métal dur (12) saillante hors de la gorge (11), la lame tranchante (3) est conformée en une surface de découpage (5 ; 22) et des flancs de découpage (6, 7, 20, 21).

12. Procédé pour la fabrication d'un cylindre de découpage (1) avec un corps de cylindre (2), ou des segments de corps de cylindre dans lequel une gorge (11) servant de support de lame tranchante est creusée dans la surface du corps du cylindre (2) ou du segment de corps du cylindre, caractérisé en ce qu'un fil en métal dur (12) est mis en forme avec apport de chaleur et fixé dans la gorge (11), et, finalement, sur la partie du fil de métal dur (12) saillante hors de la gorge (11), sont conformés des flancs de découpage (6, 7 ; 20, 21) ou des rainures ou des doubles rainures.

13. Procédé selon la revendication 11 ou 12, caractérisé en ce que le support de lame tranchante est réalisé de façon connue par fraisage de forme.

14. Procédé selon une quelconque des revendications 11 à 13, caractérisé en ce que le contour de la gorge (11) est fraisé respectivement dans le support de lame tranchante ou dans le corps du cylindre (2) ou dans un segment du corps de cylindre.

15. Procédé selon une quelconque des revendications 11 à 14, caractérisé en ce que la gorge (11) est creusée en sens radial à partir de l'extérieur, avec une section droite en triangle, en rectangle ou en secteur de cercle, respectivement dans le support de lame tranchante ou dans le corps du cylindre (2) ou dans le segment de corps du cylindre.

16. Procédé selon une quelconque des revendications 11 à 15, caractérisé en ce qu'avant l'introduction du fil de métal dur (12), le corps du cylindre (2) ou le segment de corps du cylindre, et éventuellement le support de lame tranchante sont chauffés jusqu'à une température ne dépassant pas la température de frittage du fil de métal dur (12).

17. Procédé selon une quelconque des revendications 11 à 16, caractérisé en ce qu'après la mise en place du fil de métal dur (12), le cylindre de découpage (1) est refroidi lentement.

18. Procédé selon une quelconque des revendications 11 à 17, caractérisé en ce que le fil de métal dur (12) est fixé par soudage dur dans la gorge (11), ou bien il est fixé solidement dans le corps du cylindre (2) ou dans le segment du corps du cylindre à l'aide d'un autre agent d'adhérence ou d'un liant ou d'un moyen d'une fixation mécanique.

19. Procédé selon une quelconque des revendications 11 à 18, caractérisé en ce que le cylindre de découpage (1) avec le fil de métal dur (12) mis en place est chauffé pour le soudage du fil métallique.

20. Procédé selon une quelconque des revendications 11 à 19, caractérisé en ce que le cylindre de découpage (1) avec le fil de métal dur (12) soudé est refroidi lentement jusqu'à la température ambiante.

21. Procédé selon une quelconque des revendications 11 à 20 caractérisé en ce que le cylindre de découpage (1) avec le fil de métal dur (12) mis en place est meulé cylindriquement.

22. Procédé selon la revendication 21, caractérisé en ce que des flancs de découpage (6, 7 ; 20, 21) sont usinés après le meulage cylindrique, par exemple au moyen d'une meule diamantée ou par érosion ou au moyen d'autres procédés connus, les flancs (5, 7 ; 20, 21) étant dès ce moment déterminés avec l'angle de coupe nécessaire.

23. Procédé selon une quelconque des revendications 11 à 22, caractérisé en ce qu'une surface de découpage (5 ; 22) de 0,005 à 0,5 mm, en particulier de 0,02 à 0,25 mm de large est réalisée.

24. Procédé selon une quelconque des revendications 11 à 23, caractérisée en ce que la gorge (11) est réalisée par enlèvement des fils de métal dur (12) usés.
